# EUROPEAN PATENT APPLICATION

(11) **EP 2 299 645 A1**
(43) Date of publication of application: **23.03.2011**
(21) Application number: 10173751.8
(22) Date of filing: 23.08.2010
(51) Int. Cl.: H04L 29/06, H04W 88/18, H04W 4/14

(54) **System and method for machine to machine communication**

(30) Priority: 21.08.2009 GB 0914660
(71) Applicant: Vodafone Group plc, Newbury, Berkshire RG14 2FN (GB)
(72) Inventor: Banks, Bob, Newbury, Berkshire RG14 2FN (GB); Summers, Guy, Newbury, Berkshire RG14 2FN (GB)

(57) **Abstract**

I n a cellular telecommunications network a method for facilitating communications, the method comprising: receiving information elements from a cellular data communications device, said information elements being in a format conforming with a session-based message protocol, each information element including a header portion and a plurality of payload portions; extracting machine information from at least at least one of said payload portions; and generating an output message corresponding to at least one of said payload portions.

The cellular data communications device generates information elements using information gathered from one or more information sensing, actuating and/or locating components.

## Description

The present invention relates to a system for facilitating machine to machine communications. In particular, the invention relates to a system for reliably and swiftly transporting information bi-directionally between remote wireless communications devices connected to cellular mobile networks and service and application logic hosted at a separate location.

Currently systems such as Short Message Service (SMS) and General Packet Radio Service (GPRS) are used for machine to machine communications. However these both have some drawbacks, namely:
SMS is a so-called "store and forward" service and hence can suffer from time delays in delivery depending upon load; consider the load, for instance, on New Year's Eve.
GPRS uses traffic channel resources in the network and hence can suffer time delays if the network has a high traffic load e.g. congestion, etc. GPRS is also inefficient for the transmission of small amounts of data and is less reliable than a signalling channel which, because of the importance of signalling channel data to the network, means that it has a higher probability of successfully being transported on the air interface under poor coverage conditions.

It is therefore an object of the invention to obviate or at least mitigate the aforementioned problems.

In accordance with one aspect of the present invention, there is provided a system for facilitating communications over a cellular telecommunications network, the system comprising: a cellular data communications device which generates information elements in a format conforming with a session-based message protocol, each information element including a header portion and a plurality of payload portions; a proxy server which in operation receives information elements from the cellular data communications device and extracts machine information from said at least one of said payload portions; and an information management subsystem, in communicative contact with the proxy server, which operates to receive said machine information and to generate an output message.

Preferably the information management subsystem is in communicative contact with a database, wherein the information management subsystem generates the output message in dependence upon database information supplied by the database. This database may advantageously be the Home Location Register (HLR) for the cellular telecommunications network.

Preferably the proxy server operates to filter information elements received from cellular data communications devices, the proxy server thereby acting to reduce the load on the information management subsystem.

The payload portion of the information element preferably relates to a network service and the header portion of the information element preferably indicates that the network service is to be accessed from a home network.

A first one of said payload portions may be arranged to include a network information part and a second one of said payload portions includes detailed data. The first payload portion of the information element preferably indicates the nature of the detailed data in the second payload portion.

At least one of said payload portions preferably includes labelling data, said labelling data being interpretable by the information management subsystem. The labelling data may advantageously include data corresponding to a unique identifier associated with the cellular data communications device.

One or more of the payload portions may be compressed to improve efficiency and maximise data transfer rates.

The cellular data communications device may be enhanced with additional functionality such as a tracker device, wherein location data from said tracker device being incorporated in at least one of the payload portions of said information element. The system may include logic for generating a estimating to location of the cellular data communications device using said location data. This location estimation logic may be provided on the cellular data communications device, proxy server, or the information management system.

Of course, if the cellular data communications device is in communicative contact with a sensor device of any type, sensor data from said sensor device can be incorporated in at least one of the payload portions of said information element.

Alternatively, or additionally, the cellular data communications device may be in communicative contact with an actuator device, in which case actuator instructions for said actuator device may be incorporated in at least one of the payload portions of said information element.

Preferably the cellular data communications device in operation receives information elements from the proxy server and extracts machine information from said at least one of the payload portions of said information elements. Not only can the cellular communications device be arranged to transmit data to the network (i.e. proxy server and/or the information management system), the network can also be arranged to send data to the cellular data communications device.

The machine information extracted by said cellular communications device may advantageously include data suitable for configuring said cellular communications device. This configuration data can include data relating to the setting up or configuration of the cellular communications device or any sensors in communication with the cellular communications device. The data suitable for configuring said cellular communications device may comprise data suitable for preventing further communication from said cellular communications device. This would be useful for permanently or temporarily stopping communications from the cellular communications device, and could be used when the data is no longer required, or not required for a specified period of time.

In accordance with a further aspect of the present invention, there is provided a method for facilitating communications over a cellular telecommunications network, the method comprising: receiving information elements from a cellular data communications device, said information elements being in a format conforming with a session-based message protocol, each information element including a header portion and a plurality of payload portions; extracting machine information from at least one of said payload portions; and generating an output message corresponding to at least one of said payload portions.

Preferably the cellular data communications device is in communicative contact with a sensor, locator and/or actuator device, sensor data from said sensor device being incorporated in at least one of the payload portions of said information element.

The invention thus combines advantageous features of key technology areas Unstructured Supplementary Services Data (USSD) as a bearer technology and information sensing & actuation technologies.

In accordance with a further aspect of the present invention, there is provided a system for facilitating communications over a cellular telecommunications network, the system comprising: an information management subsystem, which in operation generates machine information; a proxy server, in communicative contact with the information management system, which in operation receives machine information from the information management subsystem and compiles information elements from said machine information in a format conforming with a session-based message protocol, each information element including a header portion and a plurality of payload portions; and a cellular data communications device which in operation receives information elements from the proxy server and extracts machine information from at least one of said payload portions.

Furthermore, the invention combines advantageous features of key technology areas Unstructured Supplementary Services Data (USSD) as a bearer technology and device configuration, provisioning and initialisation.

The data/payload portion of the USSD message is thus considered to be subdivided into more than one part such that additional information over and above the data/payload information can be passed between a mobile device and a network.

For a better understanding of the present invention, reference will now be made, by way of example only, to the accompanying drawings in which:-
Figure 1 illustrates the use of USSD as a bearer technology;
Figure 2 illustrates a system suitable for implementing an embodiment of the present invention; and
Figure 3 is a graphical representation of a USSD message structure, and a table describing the message structure according to an embodiment of the present invention.

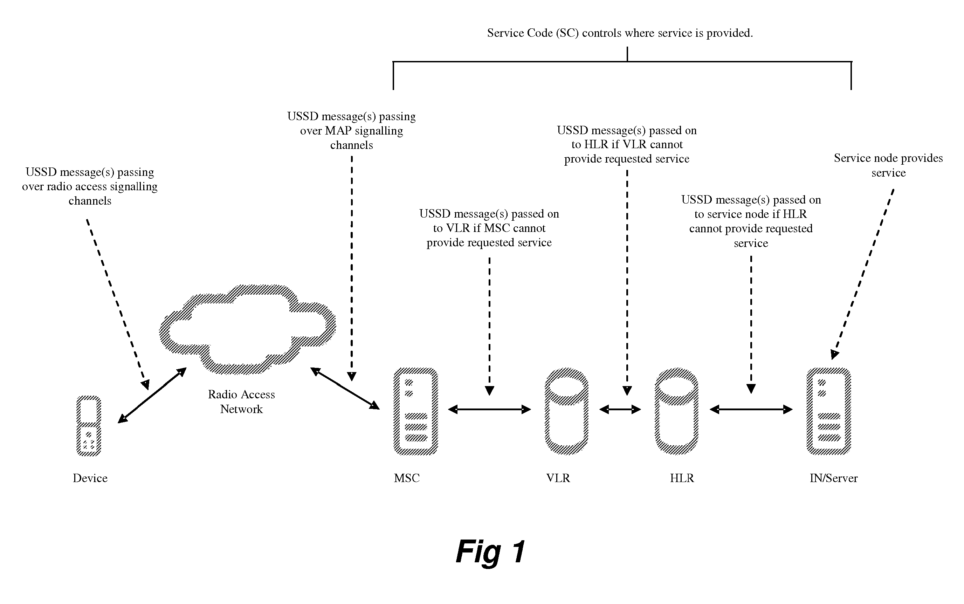

The use of USSD as a bearer technology is illustrated in Figure 1. The USSD is defined in the 3GPP specifications to facilitate the transport of information from a remote wireless data communications device to a back-office element/capability. There are several benefits of using USSD to carry the information including, for example speed of delivery, reliability of delivery, efficient use of mobile network resources and the capability to establish a data session with the remote wireless communications device.

USSD is documented in the relevant 3GPP Standards (TS22.090, TS 23.090, TS24.090) relating to GSM and WCDMA networks. The USSD bearer works both when the remote wireless data communications device in its home network (Home Private Land Mobile Network - HPLMN) and also when roaming onto a visited network (Visited Private Land Mobile Network - VPLMN) where suitable roaming agreements are in place. In both cases a suitable USSD Service Code (SC) will need to be defined or use made of a standardised USSD SC. This capability is clearly supported in the 3GPP standards and the method of the invention makes use of the appropriate SC number range such that the information is initially returned to the Home Location Register (HLR) and its receipt suitably acknowledged.

Whilst the data information passed via USSD initially arrives at the HLR it would ultimately be delivered to an information management subsystem where it could be stored or used in real-time to offer a service. In large cellular networks multiple HLRs/HSSs have to exist to enable information to be stored for all subscribers. The cost and complexity of modifying all these HLRs can be reduced by which using a dedicated numbering range for such devices thus enabling fewer HLRs to be modified and/or a proxy server(s) inserted in front of the HLRs which can strip out the relevant information from such devices before it reaches the HLRs thus removing the need to modify them. Another way of reducing the impact on the HLRs is to use a SIM without an associated MSISDN as described in co-pending UK patent publication no. GB2459435.

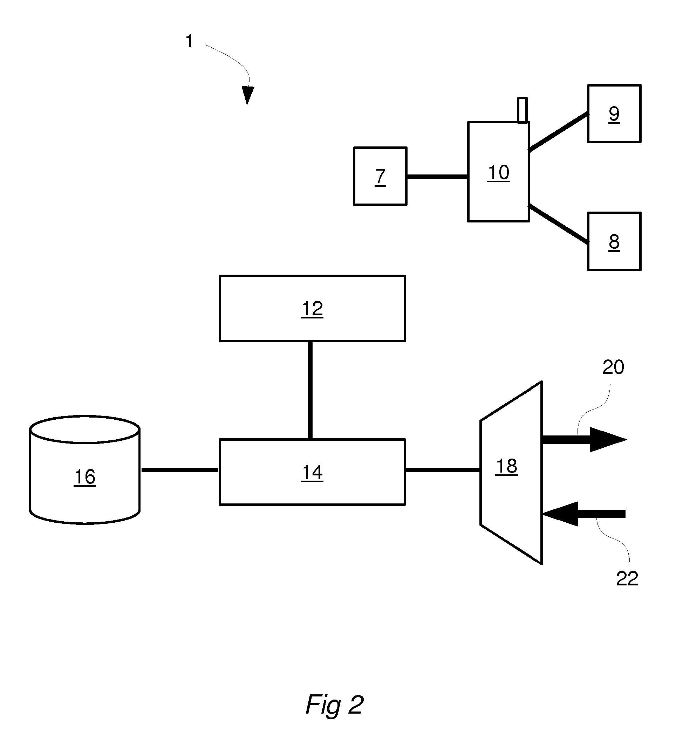

A system suitable for implementing an embodiment of the present invention is illustrated in Figure 2. The system 1 comprises a mobile communications device 10 which is connected to one ore more sensors 9 and/or actuators 8. A tracker device 7, such as a GPS circuit, may also be connected to the mobile communications device 10 which enables the mobile device 10 to determine its geographic location. The mobile communications device 10 is capable of communicating with a USSD message parser 12 via a cellular communications network. The message parser 12 is configured as a proxy server between the mobile device 10 and an information management subsystem 14, and can be used to filter USSD messages received from the either the mobile device 10 or the information management system 14. The information management subsystem 14 is connected to a database 16, which in this example is the Home Location Register (HLR) of the communications network. The information management subsystem 14 is also connected to an I/O interface 18, having an output 20 and an input 22. The output 20 is configured to send data received from the mobile device 10 and processed by the information management system 14 to an external device for further action. The input 22 is configured to receive data from an external device which is to be transmitted to the mobile device 10 via a USSD message.

The format of a USSD message is clearly defined in 3GPP standards (references provided above) and effectively consists of a header portion and a data/payload portion.

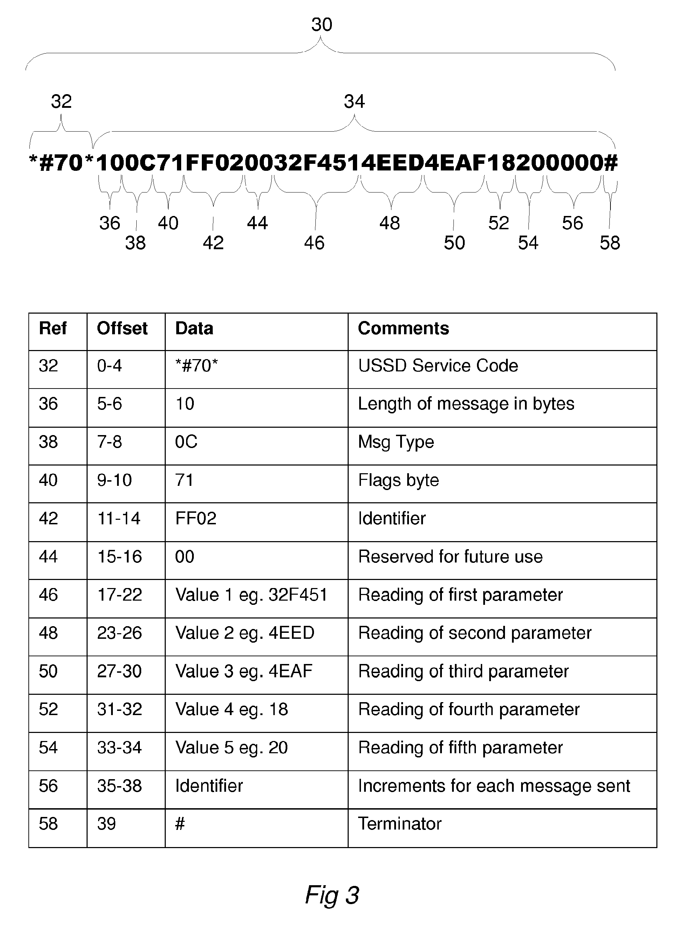

An example of the USSD message according to an embodiment of the invention is illustrated in Figure 3. The example USSD message 30 comprises the Hex code *#70*100C71FF0232F4514EED4EAF18200000#, which can be divided into the following portions:
○ The first 5 characters (offsets 0-4) are the USSD prefix and Service Code 32.
○ The next 12 characters (offsets 5-16) are informative headers 36, 38, 40, 42, 44.
○ The next 18 characters (offsets 17 to 34 inclusive) comprise the payload data 46, 48, 50, 52, 54. This can include, for example, data read from sensors 11a or actuators 11b connected to the communications device 10, or instructions/configuration data to be read by the communications device 10.
○ The next 4 characters (offsets 35-38) are an identifier 56, which can be incremented for each message sent and can be used to track the number of messages sent and the order in which messages were sent.
○ The next character (offset 39) is a terminator 58.

All information in the USSD message 30 after the USSD prefix and Service Code 32 can be collectively referred to a plurality of payload portions 36.

Assuming the serving network supports the feature, certain services can be provided locally by the serving network: for instance, by the VPLMN (in the case of a roamed subscriber). Certain other services can only be provided by the home network (HPLMN). The header portion of the USSD message is capable of identifying the service that the data/payload portion relates to and is standardised such that this header portion can identify whether the service should be available locally or only from the home network (HPLMN). In some cases the header portion may indicate that a service should be obtained from the home network irrespective of whether or not the serving network could provide that service.

In accordance with the invention the data/payload portion of the USSD message is considered to be subdivided into more than one part such that additional information over and above the data/payload information can be passed between a mobile device and a network. For example, the data/payload portion of a USSD message could be subdivided in to two parts namely a detailed data/payload part and a network information part as seen by the mobile device. The network information part may thus indicate that the detailed data/payload part is serving cell ID data, location area data, mobile country code (MCC), etc.

Since the fundamental format of the USSD message is not changed from that standardised by 3GPP it will continue to be handled by compliant 3GPP networks as a "normal" USSD message.

The number and size of parts the data/payload portion can be divided in to is obviously numerous but will have the trade off between number of parts and amount of data per part. The allocation and use of a distinct USSD permissible character (see 3GPP TS 23.038), can be used to enable this to be dynamic and hence flexible per USSD message.

Since software modifications to some, or all, of the USSD processing network elements may be required to support such a USSD message, to guarantee the support of such USSD messages it is most likely that the header portion will be set to identify a HPLMN-only service, however there is no technical reason why a serving network (VPLMN) should not support a service using such USSD messages.

The invention is applicable to both device-initiated USSD and network-initiated USSD. In the network-initiated case, the application on the mobile device needs to be capable of supporting such USSD messages.

In the invention, the term "information sensing and actuating technology" relates to the use of a remote wireless data communications device in conjunction with a corresponding sensing or actuation system either to measure or to provoke activity in the environment surrounding the remote device. The interfacing of the measurement and actuator type of unit(s) to the cellular device can be effected by a wired connection. Alternatively, it may make use of local short range wireless sensor network technology, such as RFID or ZigBee™.

In any case, the information obtained from or destined for the sensing and actuating system requires labelling either by using a suitable USSD Service Code or in the payload section of the message and formatted into a particular format that can be interpreted by the central information management subsystem. Examples of information that can be used in this manner include, but are not limited to - location, temperature, meter readings etc.

The labelling of the remotely sensed information is preferably effected using a combination of the SIM card IMSI (or alternatively the MSISDN or ICCID if appropriate) as identified at the HLR, a unique identifier reference for the attached sensor or actuator device and the specific USSD Service Code relating to the service being used. These three elements will act as a unique address for the communicated information element. Additional identifiers may be used in generating the unique address - for example the mobile network code (MNC).

The information element transmitted will be formatted to include the measurement or actuation reading and suitably compressed to make efficient use of the USSD bearer - i.e. the detailed data/payload part. Information elements of suitable length (the exact length is dependent upon a number of factors and ultimately the message length limit of MAP messaging) can be transmitted efficiently using USSD - with additional information element structures being added in line with the USSD specification as outlined above.

The invention may make use of additional, application-specific, cellular network functionality both at the remote device and at the network HLR. For instance, a given remote device may incorporate a cell ID-based tracker device.

In a further embodiment of the invention, the geographic location of a particular remote device is discovered using cell ID (or multiple Cell IDs) as reported by the mobile device to a central server. In this embodiment, the network information elements from the radio interface of the cellular mobile devices for serving cell and neighbouring cells for one or more cellular networks are extracted and transmitted to the information management subsystem over the USSD bearer via the HLR. Suitable cell locating information elements include MNC, MCC, LAC, Cell ID; and for GSM networks BSIC, BCCH, Timing Advance and RSSI.

Application logic is then used to provide an estimate of the current location of the device using the information available and suitable locating algorithms. The network information relating to cell identification can be extracted directly from the cellular mobile device using a local application programme running in the Operating System of the device in question.

Alternatively, a SIM toolkit application can be used to provide such a current location estimate. Cellular mobile network devices that support SIM toolkit application functionality enable the retrieval of Cell Identity and other related network information using the SIM toolkit interface. This provides a common interface to retrieve Cell information for locating purposes from a wide range of cellular devices. In this implementation a SIM card with either, for example, Java or WIB functionality can be programmed to retrieve the cell locating information from the mobile device and report back to the information management subsystem over USSD (or any other suitable bearer e.g. SMS or GPRS). This can then be acknowledged with a suitable response back to the SIM toolkit application to take appropriate further action (for example sleep, change reporting frequency or request additional information elements).

Not only can machine data be transmitted from a cellular data communications device to an information management subsystem, which is particularly useful for the purposes of reporting data collected from/at the cellular data communications device, but it is also possible to send machine data from the information management subsystem to the communications device. Depending on the system requirements, machine data can either be transmitted in one direction only, either to or from the communications device, or machine data can be transmitted in a two-way system.

Having a system incorporating two-way communication using a session-based message protocol, such as USSD, advantageously provides the ability for the system to provide feedback to the communications device and the information management subsystem. This can be used, for example, to instruct the adjustment of an actuator system connected to a communications device from an information management subsystem, the instruction being determined by processing data received from a sensor also connected to the communications device.

The described system can also be used to provision or configure a cellular data communications device. A payload portion of the data sent from a network subsystem to the communications device may contain data that relates to setting up and/or configuring the communications device for its first usage. This may involve: the configuring or installation of hardware, firmware or software; the configuring of the normal mode of usage of the device, for example sending a numerical value that corresponds to the reading of a sensor connected to the device; changing the device setup and/or configuration for subsequent usage, for example configuring the device to send a sensor reading more often than it had previously done or; stopping usage, either permanently or temporarily.

## Claims

1. A system (1) for facilitating communications over a cellular telecommunications network, the system comprising:
a cellular data communications device (10) which generates information elements (30) in a format conforming with a session-based message protocol, each information element including a header portion and a plurality of payload portions (36-58);
a proxy server (12) which in operation receives information elements (30) from the cellular data communications device (10) and extracts machine information from said at least one of said payload portions; and
an information management subsystem (14), in communicative contact with the proxy server, which operates to receive said machine information and to generate an output message.

2. A system as claimed in claim 1, wherein the information management subsystem (14) is in communicative contact with a database (16), and wherein the information management subsystem generates the output message (20) in dependence upon database information supplied by the database.

3. A system as claimed in claim 2, wherein the database (16) is the Home Location Register for the cellular telecommunications network.

4. A system as claimed in claims 1 to 3, wherein the proxy server (12) operates to filter information elements (30) received from cellular data communications devices (10), the proxy server thereby acting to reduce the load on the information management subsystem (14).

5. A system as claimed in any one of the preceding claims, wherein the payload portion of the information element relates to a network service and wherein the header portion of the information element indicates that the network service is to be accessed from a home network.

6. A system as claimed in any one of the preceding claims, wherein a first one of said payload portions includes a network information part and a second one of said payload portions includes detailed data.

7. A system as claimed in claim 6, wherein the first payload portion of the information element indicates the nature of the detailed data in the second payload portion.

8. A system as claimed in any one of the preceding claims, wherein at least one of said payload portions includes labelling data, said labelling data being interpretable by the information management subsystem, wherein the labelling data includes data corresponding to a unique identifier associated with the cellular data communications device.

9. A system as claimed in any one of the preceding claims, wherein the cellular data communications device is further provided with a tracker device (7), location data from said tracker device being incorporated in at least one of the payload portions of said information element, the system further comprising application logic for generating a location estimate using said location data.

10. A system as claimed in any one of the preceding claims, wherein the cellular data communications device is in communicative contact with a sensor device (9), sensor data from said sensor device being incorporated in at least one of the payload portions of said information element.

11. A system as claimed in any one of the preceding claims, wherein the cellular data communications device is in communicative contact with an actuator device (8), actuator instructions for said actuator device being incorporated in at least one of the payload portions of said information element.

12. A system as claimed in any one of the preceding claims, wherein the cellular data communications device in operation receives information elements from the proxy server and extracts machine information from said at least one of the payload portions of said information elements.

13. A system as claimed in claim 12, wherein the machine information extracted by said cellular communications device comprises data suitable for configuring said cellular communications device.

14. A method for facilitating communications over a cellular telecommunications network, the method comprising:
receiving information elements (30) from a cellular data communications device (10), said information elements being in a format conforming with a session-based message protocol, each information element including a header portion and a plurality of payload portions;
extracting machine information from at least one of said payload portions; and
generating an output message corresponding to at least one of said payload portions.

15. A method as claimed in claim 14, adapted to implement the system of any one of claims 2 to 13.

16. A system (1) for facilitating communications over a cellular telecommunications network, the system comprising:
an information management subsystem (14), which in operation generates machine information;
a proxy server (12), in communicative contact with the information management system (14), which in operation receives machine information from the information management subsystem and compiles information elements (30) from said machine information in a format conforming with a session-based message protocol, each information element including a header portion and a plurality of payload portions; and
a cellular data communications device (10) which in operation receives information elements from the proxy server and extracts machine information from at least one of said payload portions.

17. A system as claimed in claim 16, wherein the machine information extracted by said cellular communications device comprises data suitable for configuring said cellular communications device.

18. A system as claimed in claim 17, wherein the data suitable for configuring said cellular communications device comprises data suitable for preventing further communication from said cellular communications device.
